# EUROPEAN PATENT APPLICATION

(11) **EP 4 502 773 A1**
(43) Date of publication of application: **05.02.2025**
(21) Application number: 22933452.9
(22) Date of filing: 24.03.2022
(51) Int. Cl.: G06F 3/041

(54) **CONTROLLER DEVICE AND SENSOR**

(71) Applicant: Sony Interactive Entertainment Inc., Tokyo 108-0075 (JP)
(72) Inventor: NAKAMURA, Hitoshi, Tokyo 108-0075 (JP); UEDA, Yumi, Tokyo 108-0075 (JP); ANDO, Toshiyuki, Tokyo 108-0075 (JP)
(74) Representative: D Young & Co LLP
(86) International application number: PCT/JP2022/014190
(87) International publication number: WO 2023/181312

(57) **Abstract**

There are provided a deformable controller main body and at least one sensor disposed on or in the vicinity of the surface of the controller main body, the sensor having an electrode formed of an elastic conductive material.

## Description

### [Technical Field]

The present invention relates to a sensor and a controller apparatus equipped with the sensor.

### [Background Art]

Heretofore, controllers for use with video games have been formed of plastics and like materials that are relatively resistant to elastic deformation.

Meanwhile, recent years have witnessed an increasing use of techniques for vibration and kinesthetic sense presentation intended to enhance users' gaming experiences.

### [Summary]

### [Technical Problem]

Under the above circumstances, proposals have been made to fabricate a controller main body using deformable materials to provide a controller apparatus capable of enhancing haptic experiences.

However, attempts to arrange electrostatic capacitance sensors designed to detect, for example, physical contact of the user with the surface of the controller main body formed of the deformable materials have met difficulty in causing free deformation of the controller main body because of the electrodes of existing electrostatic capacitance sensors not being deformable. This has led to the problem of the users losing the sense of unity with the controller in terms of touch feel.

The present invention has been made in view of the above circumstances and provides, as an object, a controller apparatus equipped with a sensor fit for the case where the main body of the controller apparatus is made deformable.

### [Solution to Problem]

In order to solve the above problem, according to one embodiment of the present invention, there is provided a controller apparatus including a controller main body configured to be deformable, and at least one sensor configured to be disposed on or in the vicinity of the surface of the controller main body. The sensor has an electrode formed of an elastic conductive material.

### [Advantageous Effect of Invention]

According to the present invention, there is provided a controller apparatus equipped with a sensor fit for the case where the main body of the controller apparatus is made deformable.

### [Brief Description of Drawings]

[FIG. 1]

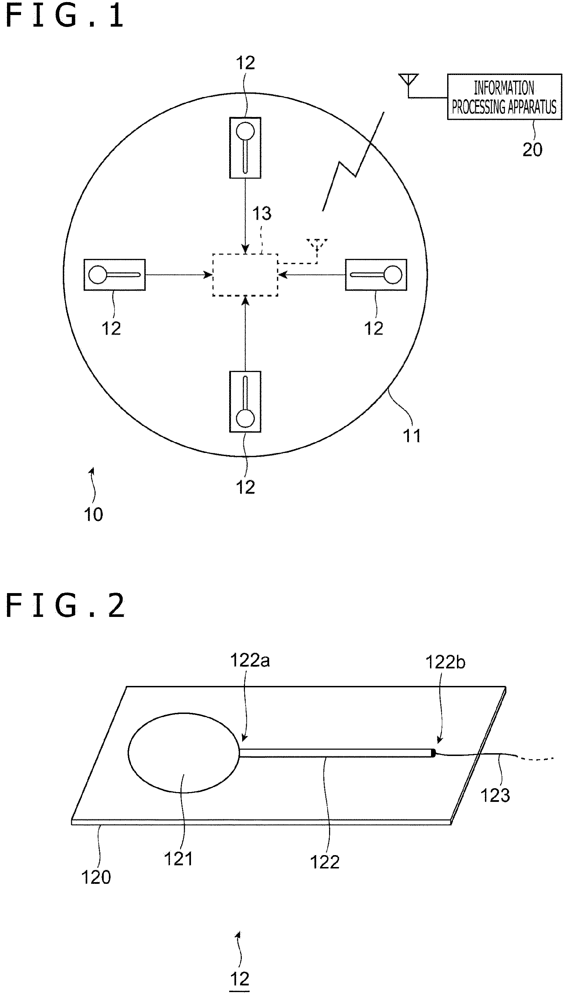

   FIG. 1 is a schematic block diagram depicting a configuration and connection example of a controller apparatus according to an embodiment of the present invention.
[FIG. 2]
   FIG. 2 is a schematic perspective view of an exemplary electrostatic capacitance sensor disposed in the controller apparatus according to the embodiment of the present invention.
[FIG. 3]

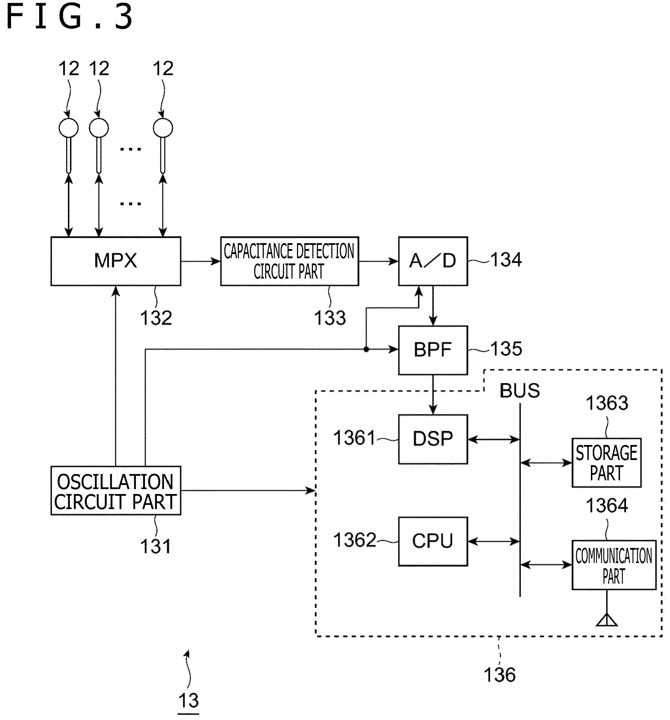

   FIG. 3 is a block diagram depicting an exemplary circuit part of the controller apparatus according to the embodiment of the present invention.
[FIG. 4]

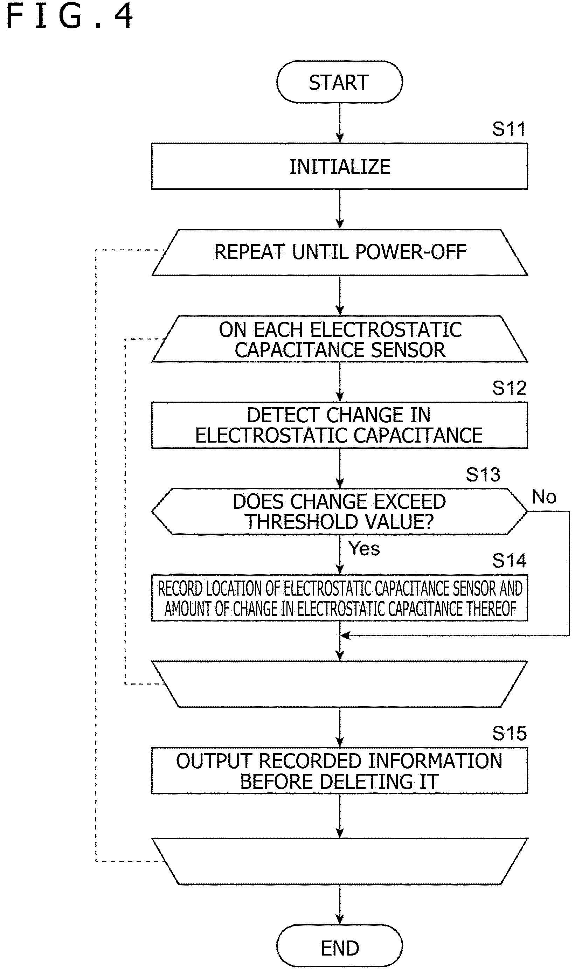

   FIG. 4 is a flowchart indicating an example of information processing by the controller apparatus according to the embodiment of the present invention.
[FIG. 5]

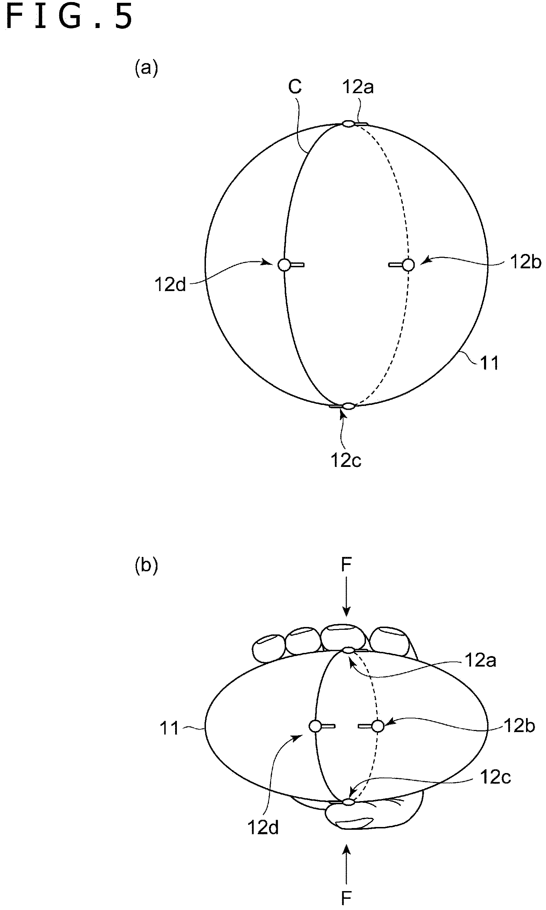

   FIG. 5 depicts explanatory diagrams depicting exemplary states of elastic deformation of the controller apparatus according to the embodiment of the present invention.
[FIG. 6]

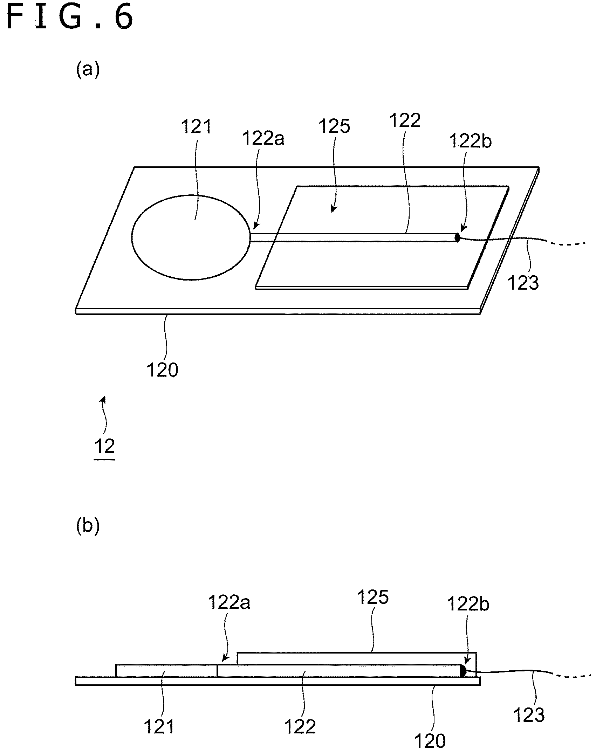

   FIG. 6 depicts schematic perspective views of another exemplary electrostatic capacitance sensor disposed in the controller apparatus according to the embodiment of the present invention.

### [Description of Embodiment]

A preferred embodiment of the present invention is described below with reference to the accompanying drawings. A controller apparatus 10 as one embodiment of the present invention is configured to have a controller main body 11, sensors (e.g., electrostatic capacitance sensors 12 in this case) disposed on or in the vicinity of the surface of the controller main body 11, and a circuit part 13, as depicted in FIG. 1. The controller apparatus 10 is communicably connected with an information processing apparatus 20 in a wired or wireless manner.

The controller main body 11 is formed of deformable materials such as polymer gel materials including silicon-based polymer gel materials and urethane-based gel materials; or elastically deformable materials such as elastomer materials including polystylene-based elastomer, olefin-based elastomer, polyvinyl chloride-based elastomer, polyurethane-based elastomer, polyester-based elastomer, and polyamide-based elastomer. The deformation here is meant to include elastic deformation, bending, sliding, and twisting.

The controller main body 11 has a predetermined shape such as a sphere or a cuboid when not subjected to an external force.

The controller main body 11 changes its shape elastically in response to the external force applied thereto by the user with fingertips, for example. At least one electrostatic capacitance sensor 12 is disposed on or in the vicinity of the surface of the controller main body 11. Further, the circuit part 13 is disposed inside the controller main body 11.

It is to be noted that the vicinity of the surface in this context means an internal space of the controller main body 11 relatively close to its surface. Specifically, the vicinity of the surface refers to a range in which the sensors such as electrostatic capacitance sensors 12 can detect the user's action on the controller main body 11. Accordingly, the range of the vicinity varies for each sensor and depending on the material of the controller main body 11. For example, in the case where the electrostatic capacitance sensors 12 are adopted as the sensors, the vicinity is defined as the range in which user's physical contact with the surface of the controller main body 11 can be detected by the sensors.

Although the sensors are not limited to the electrostatic capacitance sensors 12 as in the above example, the electrostatic capacitance sensors will be used in the description below for the purpose of clarification.

Each of the electrostatic capacitance sensors 12 is configured to have a base part 120, an electrode 121, a lead part 122, and a wiring part 123 as depicted in FIG. 2. Here, the base part 120 is a thin film-like member formed by use of an elastic insulating material (e.g., an insulating organic silicon compound). The electrode 121 and the lead part 122 are formed on the base part 120. The base part 120 may be formed integrally with the controller main body 11.

The electrode 121 is formed of an elastic conductive material on the base part 120. The electrode 121 is formed to have a predetermined shape having a predetermined area. For example, a conductive ink material may be used as the conductive material forming the electrode 121. The predetermined shape of the electrode 121 in this case may be circular, elliptical, rectangular, coiled, or polygonal, for example. The electrode 121 may be ring-like in shape and have an outer periphery of one of the above shapes.

The lead part 122 has an end 122a electrically connected to the electrode 121. The lead part 122 is formed of an elastic conductive material in a line shape having a predetermined width on the base part 120. As in the case of the electrode 121, a conductive ink material, for example, may be used as the conductive material with which to form the lead part 122.

One end of the wiring part 123 is electrically connected to the end 122b opposite to the end 122a connected to the electrode 121. The other end of the wiring part 123 is connected to the circuit part 13. The wiring part 123 is disposed in such a manner as not to come into electrical contact with the wiring part 123 of any other electrostatic capacitance sensor 12 disposed on or in the vicinity of the surface of the controller main body 11.

It is to be noted that the electrostatic capacitance sensors 12 of this example may be self-capacitance sensors or mutual capacitance sensors. It is preferred here that the Young's modulus of the base part 120 be less than that of the controller main body 11 (i.e., the base part 120 should preferably be more elastic than the controller main body 11). It is also preferred that the Young's moduli of the electrode 121 and the lead part 122 be less than the Young's modulus of the base part 120.

The circuit part 13 is disposed in the central part of the controller main body 11 of the controller apparatus 10 (at a location as far from the surface as possible). As depicted in FIG. 3, for example, the circuit part 13 includes an oscillation circuit part 131, an analog multiplexer (MPX) 132, a capacitance detection circuit part 133, an analog/digital (A/D) conversion part 134, a band pass filter (BPS) part 135, and a control part 136. The control part 136 includes a digital signal processor (DSP) 1361, a central processing unit (CPU) 1362, a storage part 1363, and a communication part 1364. The DSP 1361, the CPU 1362, the storage part 1363, and the communication part 1364 are connected with each other via a bus (BUS) .

The oscillation circuit part 131 is an oscillation circuit that oscillates a sine wave of a predetermined frequency f. The oscillation circuit part 131 outputs the oscillated sine wave signal to the analog multiplexer 132, the A/D conversion part 134, the BPF part 135, and the control part 136.

When multiple electrostatic capacitance sensors 12 are disposed on or in the vicinity of the surface of the controller main body 11, the analog multiplexer 132 selects one of the multiple electrostatic capacitance sensor 12 after another at a predetermined timing (in a predetermined cycle T sufficiently larger than the cycle t of the sine wave signal, i.e., T>>t), and outputs the sine wave signal output from the oscillation circuit part 131, to the selected electrostatic capacitance sensor 12.

The capacitance detection circuit part 133 includes an inductor-capacitor (LC) resonant circuit, for example, outputting a resonance signal in resonance with the sine wave signal output to the electrostatic capacitance sensor 12 currently selected by the analog multiplexer 132. The frequency f' of the resonance signal varies depending on the distance from the electrostatic capacitance sensor 12 selected by the analog multiplexer 132 to the user's hand or fingertips or on a push-in force (contact area) applied by the user's hand or fingertips to the electrostatic capacitance sensor 12.

The A/D conversion part 134 converts, to a digital signal, the signal of the frequency f' output from the capacitance detection circuit part 133, and outputs the digital signal resulting from the conversion. The BPF part 135 is a digital band-pass filter. From among the digital signals (signals of the frequency f') output from the A/D conversion part 134, the BPF part 135 extracts signals of a frequency component near a predetermined frequency f0.

The DSP 1361 of the control part 136 performs predetermined digital signal processing on the signal output from the BPF part 135, and outputs the processed signal to the CPU 1362. The CPU 1362 operates in accordance with programs stored in the storage part 1363, and determines differences between the signal output from the DSP 1361 and the signal of the frequency f output from the oscillation circuit part 131. On the basis of the detected differences, the CPU 1362 obtains information regarding the electrostatic capacitance sensor 12 currently selected by the analog multiplexer 132, regarding the distance from the selected sensor to the user's hand or fingertip, or regarding a pressing force applied by the user's hand or fingertips to the electrostatic capacitance sensor 12 before outputting the acquired information (referred to as the proximity contact information).

The storage part 1363 holds the programs to be executed by the CPU 1362. The programs may be provided and recorded on non-transitory computer-readable storage media and may be copied into the storage part 1363. The storage part 1363 also serves as a work memory for the CPU 1362.

The communication part 1364 may be a wireless communication interface such as a wireless local area network (LAN) interface or Bluetooth (registered trademark). In accordance with instructions input from the CPU 1362, the communication part 1364 outputs information to the information processing apparatus 20. The communication part 1364 also outputs the information received from the information processing apparatus 20 to the CPU 1362.

In this embodiment, the CPU 1362 of the controller apparatus 10 detects the electrostatic capacitance of each of the electrostatic capacitance sensors 12 selected successively by the analog multiplexer 132 and, on the basis of the detected electrostatic capacitance, outputs, to the information processing apparatus 20, the distance from the sensor to the user's hand or fingertip or the proximity contact information regarding the pressing force applied by the user's hand or fingertips to the electrostatic capacitance sensor 12.

Specifically, as depicted in FIG. 4, the CPU 1362 of the controller apparatus 10 is initialized (S11) on startup (at power-on). The CPU 1362 then detects changes in the electrostatic capacitance of each electrostatic capacitance sensor 12 disposed on or in the vicinity of the surface of the controller main body 11 (S12). The CPU 1362 determines whether or not there is any change in electrostatic capacitance exceeding a predetermined threshold value (S13).

If the change in electrostatic capacitance is found here to exceed the predetermined threshold value (S13: Yes), the CPU 1362 stores information identifying the electrostatic capacitance sensor 12 (i.e., information identifying the disposed location) in association with a value indicative of the magnitude of the detected change (S14). The CPU 1362 then returns to step S12 to continue processing the next electrostatic capacitance sensor 12.

If, in step S13, the change in electrostatic capacitance detected in step S12 is not found to exceed the predetermined threshold value (S13: No), the CPU 1362 returns to step S12 to continue processing the next electrostatic capacitance sensor 12.

The CPU 1362 repeatedly executes steps S12 through S14 on each electrostatic capacitance sensor 12. Upon completing the processing of all electrostatic capacitance sensors 12, the CPU 1362 outputs to the information processing apparatus 20 (S15) the information identifying the electrostatic capacitance sensor 12 of which the electrostatic capacitance has changed beyond the predetermined threshold value (information identifying the disposed location) and the information giving the value indicative of the magnitude of the detected change (proximity contact information).

Thereafter, the CPU 1362 repeatedly executes steps S12 through S14 on each electrostatic capacitance sensor 12 and also performs step S15 until power-off.

The information processing apparatus 20 may be a home-use game machine, a personal computer, or some other computer devices, for example. The information processing apparatus 20 is communicably connected with the controller apparatus 10. In this embodiment, the information processing apparatus 20 acquires the distance from each electrostatic capacitance sensor 12 disposed on or in the vicinity of the controller main body 11 of the controller apparatus 10 to the user's hand or fingertip, or the proximity contact information regarding the pressing force applied by the user's hand or fingertips to each electrostatic capacitance sensor 12, the distance and the proximity contact information being received from the controller apparatus 10.

On the basis of the proximity contact information regarding each electrostatic capacitance sensor 12, the information processing apparatus 20 estimates the deformation of the controller main body 11. For example, as depicted conceptually in Subfigure (a) of FIG. 5, it is assumed that the electrostatic capacitance sensors 12a, 12b, 12c, and 12d are disposed at intervals of 90 degrees on a virtual great circle C on the surface of the controller main body 11 that substantially forms a sphere.

Here, if the user pushes the electrostatic capacitance sensors 12a and 12c 12d from both sides to deform the controller main body 11 into a flat shape as depicted in Subfigure (b) of FIG. 5, a pressing force F is applied by the user's fingertips to the electrostatic capacitance sensors 12a and 12c whereas the electrostatic capacitance sensors 12b and 12d are free of contact with the user's fingertips. As a result, the controller apparatus 10 outputs, for example, the proximity contact information such as the following:
electrostatic capacitance sensor 12a: C1
electrostatic capacitance sensor 12c: C2
where, C1 and C2 represent the changes in the electrostatic capacitance of each of the electrostatic capacitance sensors 12a and 12c, respectively.

Upon receipt of the proximity contact information, the information processing apparatus 20 estimates that there is no change in the electrostatic capacitance of each of the electrostatic capacitance sensors 12b and 12d not identified by information included in the proximity contact information and that the user's pressing pressure at these locations is zero.

The information processing apparatus 20 also estimates the user's pressing force F at the locations where the electrostatic capacitance sensors 12 identified by information included in the proximity contact information are disposed, on the basis of the values of the corresponding changes in electrostatic capacitance. Well-known methods can be adopted to estimate the pressing force based on the changes in electrostatic capacitance.

The information processing apparatus 20 thus estimates the user's pressing force F at the location where each electrostatic capacitance sensor 12 of the controller apparatus 10 is disposed in a manner such as the following:
electrostatic capacitance sensor 12a: F
electrostatic capacitance sensor 12b: 0
electrostatic capacitance sensor 12c: F
electrostatic capacitance sensor 12d: 0

The information processing apparatus 20 estimates the deformation of the controller main body 11 by use of such pieces of the estimated information. Specifically, in the above example, the information processing apparatus 20 estimates that the electrostatic capacitance sensors 12a and 12c of the controller main body 11 are pressed from both sides so that the controller main body 11 is deformed into a flat shape.

The above estimation is only an example. The information processing apparatus 20 is only required to estimate the deformation of the controller apparatus 10 on the basis of the proximity contact information obtained therefrom and according to experimentally and previously obtained relations between proximity contact information and the deformation of the controller apparatus 10.

### [Advantageous effects of the embodiment]

According to the example of the embodiment discussed above, there is provided a sensor fit for the case where the main body of the controller apparatus is made deformable. The electrode 121 and the lead part 122 of the sensor are disposed in a manner avoiding the wiring of other sensors, which prevents interference between the wiring parts in terms of electrostatic capacitance.

### [Another exemplary configuration of the electrostatic capacitance sensor]

The electrostatic capacitance sensor 12 of this embodiment is not limited to the configuration in which the electrode 121 and the lead part 122 are disposed on the base part 120 and the lead part 122 is connected with the wiring part 123, as depicted in FIG. 2.

In another example, as depicted in the perspective view ((a) and the cross-sectional view (b)) of FIG. 6, the electrode 121 and the lead part 122 may be disposed on the base part 120, the lead part 122 being connected with the wiring part 123, the lead part 122 being further covered at least partially by a covering body 125.

The covering body 125 is made by use of an elastic insulating material (e.g., insulating organic silicon compound) as with the base part 120. The covering body 125 is formed as a thin film-like member as in the case of the base part 120.

In this example, too, the electrode 121 is formed of an elastic conductive material such as a conductive ink material. The lead part 122 also has the end 122a electrically connected to the electrode 121 and is formed of an elastic conductive material in a line shape having a predetermined width on the base part 120.

In this example, that is, the electrostatic capacitance sensor 12 is constituted by the base part 120 as a base layer formed of an elastic insulating material starting from near the inside of the controller main body 11, by the electrode 121 and lead part 122 each formed of an elastic insulating material, and by the covering body 125 as a covering layer at least partially covering the lead part 122, all stacked in this order. For example, the covering body 125 may partially expose (not cover) the end of the lead part 122 on the side of the electrode 121 while covering the end of the lead part 122 on the side of the wiring part 123.

Here, it is preferred that the Young's modulus of the covering body 125 serving as the covering layer be approximately equivalent to that of the base part 120 (i.e., the covering body 125 and the base part 120 should preferably have an approximately equivalent level of elasticity).

When the electrostatic capacitance sensors 12 of this example are used on or in the proximity of the surface of the controller main body 11, the value of the change in electrostatic capacitance upon contact with the electrode 121 is made different from the value of the change in electrostatic capacitance upon contact with the lead part 122, which improves the accuracy of detection. In addition, even if the lead parts 122 of other electrostatic capacitance sensors 12 overlap with each other, the lead parts 122 do not come into electrical contact with one another. Thus disposed, the electrostatic capacitance sensors 12 do not interfere with each other in terms of electrostatic capacitance, which enhances the degree of freedom in disposing the electrostatic capacitance sensors 12.

### [Reference Signs List]

10: Controller apparatus
11: Controller main body
12: Electrostatic capacitance sensor
13: Circuit part
20: Information processing apparatus
120: Base part
121: Electrode
122: Lead part
123: Wiring part
125: Covering body
131: Oscillation circuit part
132: Analog multiplexer
133: Capacitance detection circuit part
134: A/D conversion part
135: BPF part
136: Control part
1361: DSP
1362: CPU
1363: Storage part
1364: Communication part

## Claims

1. A controller apparatus comprising:
a controller main body configured to be deformable; and
at least one sensor configured to be disposed on or in a vicinity of a surface of the controller main body, wherein
the sensor has an electrode formed of an elastic conductive material.

2. The controller apparatus according to claim 1, wherein
the sensor has the electrode formed of the elastic conductive material and a lead part electrically connected to the electrode and formed of an elastic conductive material, and
the lead part is covered at least partially by an elastic insulating material.

3. The controller apparatus according to claim 1 or 2, wherein
the sensor includes a base layer formed of an elastic insulating material starting from near an inside of the controller main body, and an electrode layer having the electrode formed of the elastic conductive material, and
the electrode layer has a lead part electrically connected to the electrode and formed of an elastic conductive material, the lead part being covered at least partially by a covering layer formed of an elastic insulating material.

4. The controller apparatus according to any one of claims 1 to 3, wherein the sensor is an electrostatic capacitance sensor.

5. The controller apparatus according to any one of claims 1 to 4, wherein the controller main body is elastically deformable.

6. A sensor disposed on or in a vicinity of a surface of a deformable controller main body, the sensor comprising:
an electrode formed of an elastic conductive material.
